# EUROPEAN PATENT APPLICATION

(11) **EP 2 190 089 A2**
(43) Date of publication of application: **26.05.2010**
(21) Application number: 09013595.5
(22) Date of filing: 28.10.2009
(51) Int. Cl.: H02G 3/04, B60R 16/02, C09J 7/04

(54) **A wire protective member and method of at least partly covering a wire**

(30) Priority: 19.11.2008 JP 2008295538; 19.03.2009 JP 2009068783
(71) Applicant: Sumitomo Wiring Systems, Ltd., Yokkaichi-city, Mie 510-8503 (JP)
(72) Inventor: Doi, Masayuki, Yokkaichi-city Mie 510-8503 (JP); Morii, Toshitsugu, Yokkaichi-city Mie 510-8503 (JP); Imatoku, Arisa, Yokkaichi-city Mie 510-8503 (JP)
(74) Representative: Müller-Boré & Partner Patentanwälte

(57) **Abstract**

An object of the present invention is to provide a wire protective member which requires reduced time and effort for a mounting operation and a reduced number of parts, is space saving and has improved abrasion resistance.

A wire protective member 10 of the present invention is for covering a wire 11 from an outer side. The present invention is characterized in including a first base member 13 including a first adhesive layer 12 to be bonded to the wire 11 on one surface thereof, a second base member 16 to be placed on a surface of the first base member 13 opposite to the one including the first adhesive layer 12, and spacers 14 formed in parts of a clearance between the first and second base members 13, 16. According to the present invention, since no clearance is formed between the wire 11 and the protective member 10, space saving can be promoted. Further, since it is sufficient to wrap the wire 11 with one member composed of the first adhesive layer 12, the first base member 13, the layer partly formed with the spacers 14 and the second base member 16, time and effort for a mounting operation and the number of parts can be reduced.

## Description

The present invention relates to a wire protective member and to a method of at least partly covering a wire.

A wire laid in an automotive vehicle or the like includes a corrugated tube as an external protective member to protect the wire from friction with members and the like arranged around the wire. The one disclosed, for example, Japanese Unexamined Patent Publication No. 2000-353432 is known as such a corrugated tube.

A general corrugated tube is formed with a slit extending in a longitudinal direction, and a wire is accommodated therein by opening this slit. The wire accommodated in the corrugated tube is wrapped around with a tape or the like to improve accommodating operability and protect the wire from friction with the inner wall of the corrugated tube. Further, the corrugated tube accommodating the wire is wrapped around with a tape or the like to prevent the opening of the slit, for example, upon being bent.

Accordingly, the production of a wire including a corrugated tube requires an operation of wrapping a tape or the like around the wire, an operation of accommodating the wire into the corrugated tube and an operation of winding a tape for preventing the opening of the corrugated tube, and is expensive due to required time and effort and a large number of parts.

From the viewpoint of preventing the wire including the corrugated tube from the wire coming out of the corrugated tube, a take-up rate of the wire in the corrugated tube is restricted. In other words, since a space is present between the wire and the corrugated tube in the wire including the corrugated tube, the restriction on the take-up rate of the wire has stood as a hindrance to space saving.

Members arranged around the wire include the one formed by bending a base plate obtained from a metal plate and having a developed shape of the member. Such a base plate is obtained by punching out the metal plate or cutting the metal plate using a cutting tool. Upon cutting the base plate using the cutting tool, a cutting cross section is extended in a cutting direction due to metal ductility, whereby small burrs may be possibly formed in a relative wide area. Upon punching out the metal plate, narrow and long projecting burrs may be possibly formed. Thus, these burrs may abrade the wire protective member upon coming into contact with the wire protective member.

The prevent invention was developed in view of the above situation and an object thereof is to provide a wire protective member and a covering method which requires reduced time and effort for a mounting operation on a wire and a reduced number of parts, is space saving and has improved abrasion resistance.

This object is solved according to the invention by the features of the independent claims. Preferred embodiments of the invention are subject of the dependent claims.

According to the invention, there is provided a wire protective member for at least partly covering a wire from an outer side, comprising:
a first base member including a first adhesive layer to be bonded to the wire on one surface thereof,
a second base member to be placed on a surface of the first base member opposite to the one including the first adhesive layer, and
one or more spacers formed in parts of a clearance between the first and second base members.

According to the above construction, since the protective member is bonded and fixed to the wire via the adhesive layer, no clearance is formed between the wire and the protective member, wherefore space saving can be promoted. Further, since it is sufficient to wrap the wire with one member composed of four layers, i.e. the adhesive layer, the first base member, the layer partly formed with the spacers (spacer layer) and the second base member, time and effort for a mounting operation on the wire and the number of parts can be reduced.

As described above, members arranged around the wire may be possibly formed with small burrs in a relatively wide area or narrow and long projecting burrs formed when the members are punched out. Thus, there is a possibility of abrasion caused by the contact of these burrs and the wire protective member. However, the above protective member particularly has the four-layer structure and an appropriate thickness. Thus, even if narrow and long projecting burrs come into contact with the protective member, it is difficult for the burrs to reach the wire inside. Further, since the spacers are partly formed in the spacer layer of the protective member of the present invention and void parts (void portions) are formed in the parts where no spacers are formed, even if the protective member and burrs formed in a relatively wide area come into contact, the second base member is resiliently deformed to escape into the void portions. As a result, abrasion resistance can be improved.

The present invention may also have the following constructions.
(1) The spacers may be formed by applying an adhesive to parts of the surface of the first base member opposite to the one including the first adhesive layer.
   According to this construction, the adhesive is partly applied to the surface of the first base member opposite to the one including the adhesive layer and the second base member is placed on the adhesive, whereby the second base member is bonded to the partly applied adhesive. In other words, the spacers are formed by partly applying the adhesive and the first and second base members are bonded by the application of the adhesive, wherefore the protective member of the present invention can be easily formed.
(2) At least either one of the first and second base members may be formed with cutting or separation lines. According to this construction, the protective member can be easily hand-cut even if the thickness of the entire protective member is large.
(3) The sum of the thickness of the first base member and that of the second base member may be substantially equal to or smaller than 1.0 mm. According to this construction, the protective member can be easily hand-cut. It should be noted that the thickness of the first base member does not include that of the adhesive layer and that of the spacers and the thickness of the second base member does not include that of the spacers.
(4) The wire protective member may be in the form of a substantially rectangular sheet with the length of the longer sides thereof related to that of the wire and/or the length of the shorter sides thereof related to that of the outer circumference of the wire.

According to this construction, only by wrapping the protective member once around the outer circumferential surface of the wire with a longer side direction of the substantially rectangular protective member aligned in parallel with a longitudinal direction of the wire, the protective member can be bonded and fixed to the wire. Therefore, the mounting operation is easy.

According to the invention, there is further provided a wire protective member, particularly according to the above invention or a preferred embodiment thereof, in the form of a tape for at least partly covering a wire from an outer side, comprising:
a laminated or composite base member formed by bonding two fabric materials made of a knitted fabric and/or a woven fabric using a glue and/or an adhesive, and
an adhesive layer formed on the underside of the base member.

According to this construction, the tape-like protective member has the base member particularly having a three-layer structure by bonding the two fabric materials using the blue or the adhesive and, in the case of being subjected to an external load, the load is mainly distributed in the two fabric materials to relax a stress, wherefore the base member is difficult to abrade, i.e. can be said to have good abrasion resistance. By having the above three-layer structure, the protective member can be easily hand-cut, i.e. has a good hand cutting property. By wrapping a wire bundle with such a protective member having good abrasion resistance, a function of protecting this wire bundle can be sufficiently fulfilled.

In addition, since the protective member can be mounted only by being wrapped around the outer circumferential surface of the wire bundle and has good hand cutting property, it can be easily hand-cut, with the result that the protective member can be efficiently mounted. In other words, time required for the mounting operation of the protective member can be shortened and the number of parts can also be reduced, wherefore a production cost can be drastically reduced.

Since the tape is only wrapped, an increase of the diameter of a wiring harness can be suppressed to a minimum level, which can contribute to space saving and also to weight saving.

The present invention may also have the following constructions.
(1) The glue and/or the adhesive for bonding the two fabric materials of the base member is applied in dots.

Since the glue and/or the adhesive is applied in dots to bond the two fabric materials and clearances are formed between the two fabric materials, a better load distribution function of the fabric materials is displayed. Further, the protective member has good sound deadening qualities and the generation of noise is suppressed when a wiring harness comes into contact with or is abraded against a surrounding member or the like due to vibration or the like. Further, the protective member has good flexibility and can be more closely wrapped around the outer circumferential surface of the wire bundle even if the outer circumferential surface of the wire bundle is uneven or the wire bundle is bent.

According to the invention, there is further provided a wire protective member, particularly according to the above invention or a preferred embodiment thereof, in the form of a tape for at least partly covering a wire from an outer side, comprising:
a laminated or composite base member formed by bonding a fabric material made of a woven fabric or a knitted fabric and a sheet material via a rubber adhesive, and
an adhesive layer formed on the underside of the base member.

According to this construction, the tape-like protective member has the base member having a three-layer structure by bonding the fabric material made of the woven fabric or the knitted fabric and the other sheet member via the rubber adhesive and, in the case of being subjected to an external load, a stress is mainly relaxed in the rubber adhesive as an intermediate layer, wherefore the base member is difficult to abrade, i.e. can be said to have good abrasion resistance. Since at least the outer or underside layer of the base member is made of the fabric material made of the woven fabric or the knitted fabric, the base member can be easily hand-cut, i.e. has a good hand cutting property. By wrapping a wire bundle with such a protective member having good abrasion resistance, a function of protecting this wire bundle can be sufficiently fulfilled.

In addition, since the protective member can be mounted only by being wrapped around the outer circumferential surface of the wire bundle and has good hand cutting property, it can be easily hand-cut, with the result that the protective member can be efficiently mounted. In other words, time required for the mounting operation of the protective member can be shortened and the number of parts can also be reduced, wherefore a production cost can be drastically reduced.

Since the tape is only wrapped, an increase of the diameter of a wiring harness can be suppressed to a minimum level, which can contribute to space saving and also to weight saving.

Further, the protective member has good sound deadening qualities and the generation of noise is suppressed when a wiring harness comes into contact with or is abraded against a surrounding member or the like due to vibration or the like. Furthermore, the protective member has good flexibility and can be more closely wrapped around the outer circumferential surface of the wire bundle even if the outer circumferential surface of the wire bundle is uneven or the wire bundle is bent.

According to the invention, there is further provided method of at least partly covering a wire from an outer side with a wire protective member, particularly according to the above invention or a preferred embodiment thereof, comprising the following steps:
bonding a first base member including a first adhesive layer to the wire on one surface thereof,
placing a second base member on a surface of the first base member opposite to the one including the first adhesive layer,
forming one or more spacers in parts of a clearance between the first and second base members,
at least partly applying the thus obtained wire protective member onto the wire.

The present invention may also have the following constructions.
(1) The forming step of the spacers may comprise applying an adhesive to parts of the surface of the first base member opposite to the one including the first adhesive layer.
(2) At least either one of the first and second base members may be formed with cutting or separation lines. According to this construction, the protective member can be easily hand-cut even if the thickness of the entire protective member is large.
(3) The sum of the thickness of the first base member and that of the second base member may be set to be substantially equal to or smaller than 1.0 mm. According to this construction, the protective member can be easily hand-cut. It should be noted that the thickness of the first base member does not include that of the adhesive layer and that of the spacers and the thickness of the second base member does not include that of the spacers.
(4) The wire protective member may be in the form of a substantially rectangular sheet with the length of the longer sides thereof related to that of the wire and/or the length of the shorter sides thereof related to that of the outer circumference of the wire.

According to this construction, only by wrapping the protective member once around the outer circumferential surface of the wire with a longer side direction of the substantially rectangular protective member aligned in parallel with a longitudinal direction of the wire, the protective member can be bonded and fixed to the wire. Therefore, the mounting operation is easy.

According to the invention, there is further provided a method, in particular according to the above invention or a preferred embodiment thereof, of at least partly covering a wire from an outer side with a wire protective member in the form of a tape, comprising the following steps:
forming a laminated or composite base member by bonding two fabric materials made of a knitted fabric and/or a woven fabric using a glue and/or an adhesive,
forming an adhesive layer on the underside of the base member, and
at least partly applying the thus obtained wire protective member onto the wire,
wherein the glue and/or the adhesive for bonding the two fabric materials of the base member preferably is applied in dots.

According to the invention, there is further provided a method, in particular according to the above invention or a preferred embodiment thereof, of at least partly covering a wire from an outer side with a wire protective member in the form of a tape, comprising the following steps:
forming a laminated or composite base member by bonding a fabric material made of a woven fabric or a knitted fabric and a sheet material via a rubber adhesive,
forming an adhesive layer on the underside of the base member, and
at least partly applying the thus obtained wire protective member onto the wire.

According to the above, a wire protective member and an according wire covering method can be provided which reduces time and effort for a mounting operation on a wire and the number of parts, is space saving and has improved abrasion resistance.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a section of a wire covered by a wire protective member according to a first embodiment,
FIG. 2 is a section of the wire protective member,
FIG. 3 is a plan view of a part of a first base member formed with second adhesive portions with a surface formed with the second adhesive portions faced up,
FIG. 4 is a perspective view of the wire covered by the wire protective member,
FIG. 5 is a perspective view of a wire covered by a wire protective member according to a second embodiment,
FIG. 6 is a plan view showing a part of a first base member formed with spacers according to a third embodiment with a surface formed with the spacers faced up,
FIG. 7 is a section of a protective tape according to a fourth embodiment,
FIG. 8 is a perspective view of a roll of the protective tape,
FIG. 9 is a side view showing a wrapping mode of the protective tape around a wire bundle,
FIG. 10 is a perspective view showing another wrapping mode of the protective tape around the wire bundle,
FIG. 11 is a perspective view showing still another wrapping mode of the protective tape around the wire bundle,
FIG. 12 is a schematic diagram of an abrasion resistance tester,
FIG. 13 is a graph showing a test result,
FIG. 14 is a schematic diagram of a sound deadening tester relating to hammering sounds,
FIG. 15 is a graph showing a test result,
FIG. 16 is a schematic diagram of a sound deadening tester relating to friction sounds,
FIG. 17 is a graph showing a test result, and
FIG. 18 is a section of a protective tape according to a fifth embodiment.

Hereinafter, embodiments of the present invention are described with reference to the accompanying drawings.

### <First Embodiment>

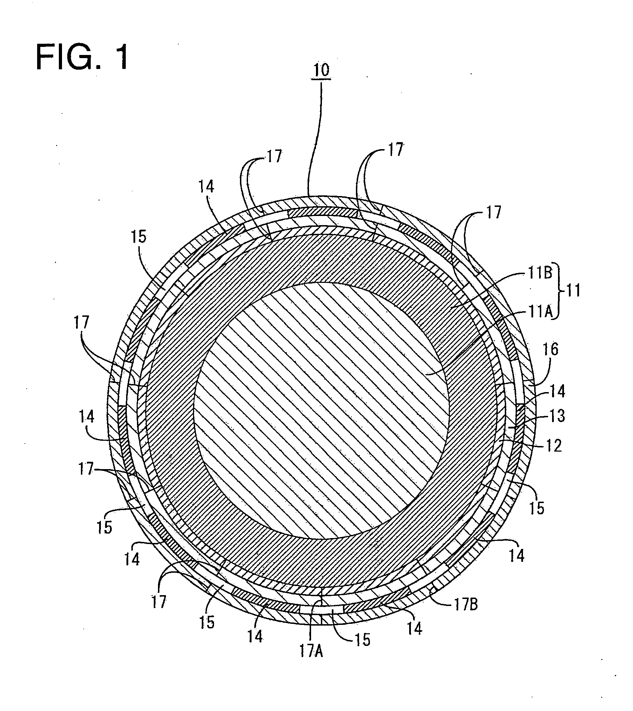

A first preferred embodiment of the present invention is described with reference to FIGS. 1 to 4.

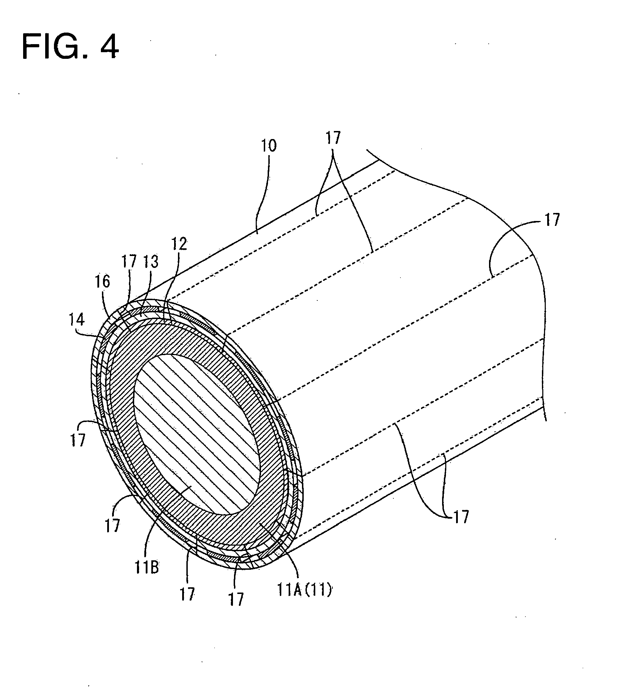

A wire protective member 10 of this embodiment (hereinafter, also merely called "protective member 10") is for protecting at least one wire 11, in which a core 11 A is at least partly covered by an insulation coating 11 B, by covering the wire 11 I from an outer side as show in FIGS. 1 and 4.

The protective member 10 of this embodiment particularly is in the form of a substantially rectangular sheet, wherein the length of its longer sides is set to substantially correspond to the length of the wire 11 and/or that of its shorter sides is set to at least substantially correspond to the length of the outer circumference of the wire 11. This protective member 10 is to be bonded and fixed while being wrapped around the wire 11 with a longer side direction (longitudinal direction) thereof aligned substantially in parallel with a longitudinal direction of the wire 11 and/or a shorter side direction thereof substantially aligned with the outer circumference of the wire 11 (see FIG. 4).

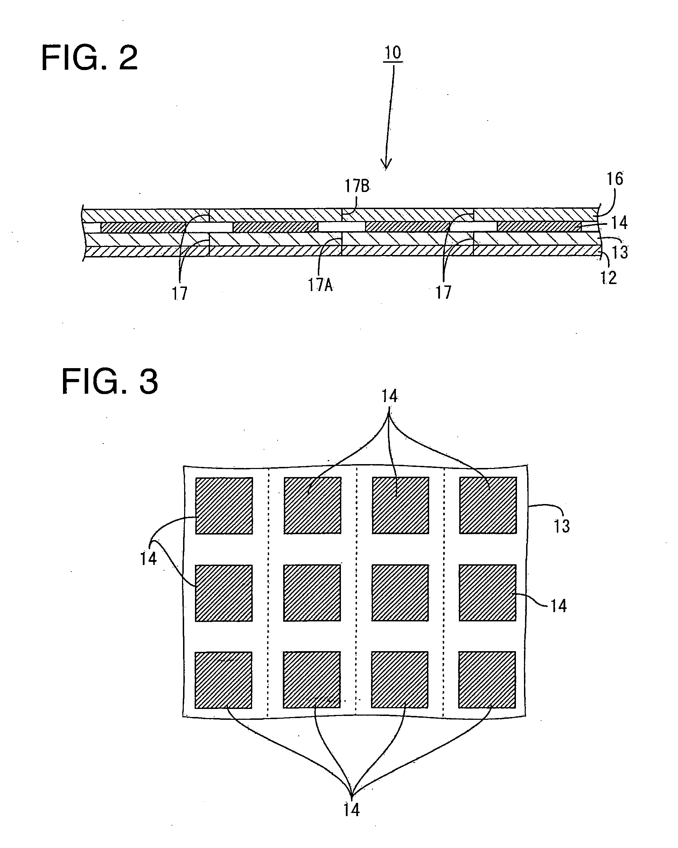

As shown in FIGS. 1 and 2, the protective member 10 is such that a first adhesive layer 12 to be bonded to the wire 11, a first base member 13, a spacer layer partly formed with one or more spacers 14 and a second base member 16 are laminated or arranged one on top of each other or radially arranged.

The protective member 10 is formed with one or more perforations 17 (cutting lines) as preferred weakened portions substantially extending from the second base member 16 to the first adhesive layer 12 to be bonded to the wire 11 and easily separated or cut e.g. by hand. Specifically, the perforations 17 are so formed in the protective member 10 as to substantially correspond to void parts 15 (void portions 15) where no spacers 14 are formed. Identified by 17A in FIGS. 1 and 2 are one or more perforations as preferred weakened portions formed in the first base member 13 and by 17B are those formed in the second base member 16.

In this embodiment, the sum of the thickness of the first base member 13 and that of the second base member 16 preferably is set equal to or smaller than 1.0 mm so as to particularly enable easy hand cutting or separation even in parts where no perforations 17 are formed.

For example, a resin sheet, a metal foil, a paper, a nonwoven fabric and/or a woven fabric can be used as the first base member 13 of the protective member 10.

The first adhesive layer 12 to be bonded to the wire 11 preferably is entirely formed in one surface (lower surface in FIG. 2) of the first base member 13, and the one or more spaces 14 are formed at specified (predetermined or predeterminable) intervals on the other surface (upper surface in FIG. 2).

The first adhesive layer 12 particularly can be formed by applying a known adhesive such as a rubber adhesive, a polyurethane adhesive, an acrylic adhesive, a silicone adhesive and/or a polyether adhesive. The thickness of the first adhesive layer 12 is preferably equal to or larger than 0.1 mm and/or equal to or smaller than 0.5 mm.

In this embodiment, the layer formed with the spacers 14 is composed or comprised of the (preferably substantially rectangular) spacers 14 formed by applying an adhesive to the other surface of the first base member 13 and curing it and the void portions 15 where no spacers 14 are formed.

The adhesive for forming the spacers 14 is applied to the first base member 13 to particularly substantially have rectangular or squared shapes as shown by shading in FIG. 3. In the following description, the parts where the adhesive for forming the spacers 14 is applied are called second adhesive portions 14.

It is preferable that the size of the spacers 14 formed after curing the second adhesive portions 14 approximately is 10 mm to 20 mm×10 mm to 20 mm and/or the thickness thereof is equal to or larger than 0.1 mm and/or equal to or smaller than 0.5 mm. An interval between adjacent spacers 14 is set to be preferably about 2 mm to 5 mm.

The adhesives cited as the one used to form the first adhesive layer 12 and/or a UV-setting adhesive can be used as the adhesive for forming the spacers 14, but a preferable adhesive has such hardness as not to be broken when the protective member 10 is wrapped around the wire 11. The adhesive for forming the spacers 14 can be applied by a known method such as a method for printing an adhesive.

A material similar to those cited as the first base member 13 can be used as the second base member 16 to be arranged on the first base member 13. The use of a nonwoven fabric or a woven fabric as the second base member 16 is preferable particularly as a countermeasure against noise.

The protective member 10 can be produced, for example, by the following method.

First of all, a step of applying the adhesive for forming the first adhesive layer 12 to the one surface of the first base member 13 and a step of applying the adhesive for forming the spacers 14 to the other surface of the first base member 12 are performed in one line, thereby forming the first base member 13 including the first adhesive layer 12 on the one surface thereof and the second adhesive portions 14, which are formed by applying the adhesive for forming the spacers 14, on the other surface thereof.

Next, after the second base member 16 is placed on and attached to the second adhesive portions 14 formed on the first base member 13 and the second adhesive portions 14 are cured, the perforations 17 are formed at specified (predetermined or predeterminable) positions of the obtained protective member 10 in the form of one sheet, thereby preferably obtaining the protective member 10 of this embodiment including the spacers 14 between the first and second base members 13, 16 and formed with the perforations 17.

Next, functions and effects of this embodiment are described.

Since the protective member 10 is to be fixed to the wire 11 via the first adhesive layer 12 according to this embodiment, no clearance is formed between the wire 11 and the protective member 10, wherefore space saving is possible. Further, since it is sufficient to wrap one member (protective member 10), in which the first adhesive layer 12, the first base member 13, the layer formed with the spacers 14 and the second base member 16 are arranged at least partly one over another, around the wire 11 and to bond this member to the wire 11, time and effort for the mounting operation and the number of parts can be reduced.

Members arranged around the wire 11 may be possibly formed with small burrs in a relatively wide area or narrow and long projecting burrs formed when the members are punched out. However, the protective member 10 of this embodiment has a four-layer structure composed or comprised of the first adhesive layer 12, the first base member 13, the layer formed with the spacers 14 and the second base member 16 and has an appropriate thickness. Thus, even if narrow and long projecting burrs come into contact with the protective member 10, it is difficult for the burrs to reach the wire 11 inside. Further, even if the protective member 10 and burrs formed in a relatively wide area come into contact, the second base member 16 is resiliently deformed to escape into the void portions 15. As a result, abrasion resistance can be improved according to this embodiment.

According to this embodiment, the spacers 14 are formed from the second adhesive portions formed by partly applying the adhesive to the radially outside surface of the first base member 13 or to the surface of the first base member 13 substantially opposite to the one including the first adhesive layer 12, and the second base member 16 is bonded to the second adhesive portions by being placed or adhered thereon. In other words, since the second adhesive portions 14 for forming the spacers 14 preferably also have a function of bonding the first base member 13 and the second base member 16, the protective member 10 can be easily produced.

Further, since the first and second base members 13, 16 are respectively formed with the one or more perforations 17A, 17B, they can be easily hand-cut or separated by hand along the perforations 17. Furthermore, since the sum of the thickness of the first base member 13 and that of the second base member 16 preferably is set equal to or smaller than 1.0 mm, the protective member 10 can be easily hand-cut or separated by hand even in parts where no perforations 17 are formed.

Since the protective member 10 preferably is in the form of the substantially rectangular sheet with the length of the longer sides thereof related to that of the wire 11 and/or the length of the shorter sides thereof related to the length of the outer circumference of the wire 11, the protective member 10 in the form of the substantially rectangular sheet preferably can be bonded and fixed to the wire 11 only by being wrapped along the outer circumference of the wire 11, wherefore the mounting operation or processing can be easily performed.

### <Second Embodiment>

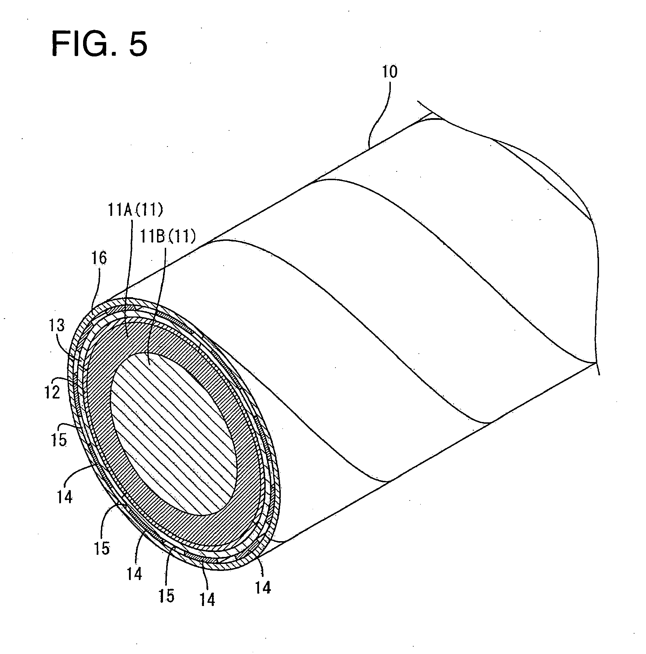

Next, a second preferred embodiment of the present invention is described with reference to FIG. 5. A construction substantially same or similar to the first embodiment is identified by the same reference numerals and not repeatedly described.

A protective member 10 of this embodiment differs from the first embodiment in being in the form of a tape having a narrower width than in the first embodiment and/or being formed with no perforations 17.

As shown in FIG. 5, the protective member 10 is bonded and fixed by being obliquely wrapped around the wire 11 with respect to a longitudinal direction of the wire 11 with a first adhesive layer 12 arranged at a side toward a wire 11.

Also in this embodiment, since the protective member 10 is fixed to the wire 11 via the first adhesive layer 12 similar to the first embodiment, space saving is possible and it is sufficient to wrap the protective member 10 around the wire 11 so as to be bonded to the wire 11. Therefore, time and effort for a mounting operation and the number of parts can be reduced.

Similar to the protective member 10 of the first embodiment, the protective member 10 of this embodiment also has an appropriate thickness and is partly formed with spacers 14, wherefore abrasion resistance can be improved. Further, since the spacers 14 are formed by partly applying an adhesive, second adhesive portions 14 for forming the spacers 14 also have a function of bonding a first base member 13 and a second base member 16, wherefore the protective member 10 can be easily produced.

### <Third Embodiment>

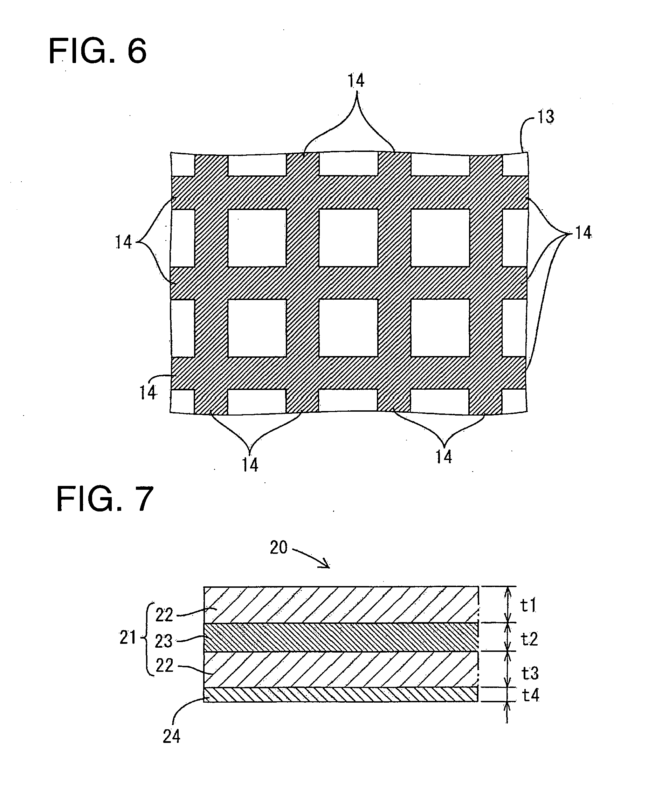

FIG. 6 shows a third preferred embodiment of the present invention. The shape of spacers 14 is not limited to the rectangular shapes shown in the above first and second embodiments, and may be a lattice or matrix-like shape as shown in FIG. 6. Besides, the spacers 14 may have a circular or elliptic or round shape (not shown).

### <Fourth Embodiment>

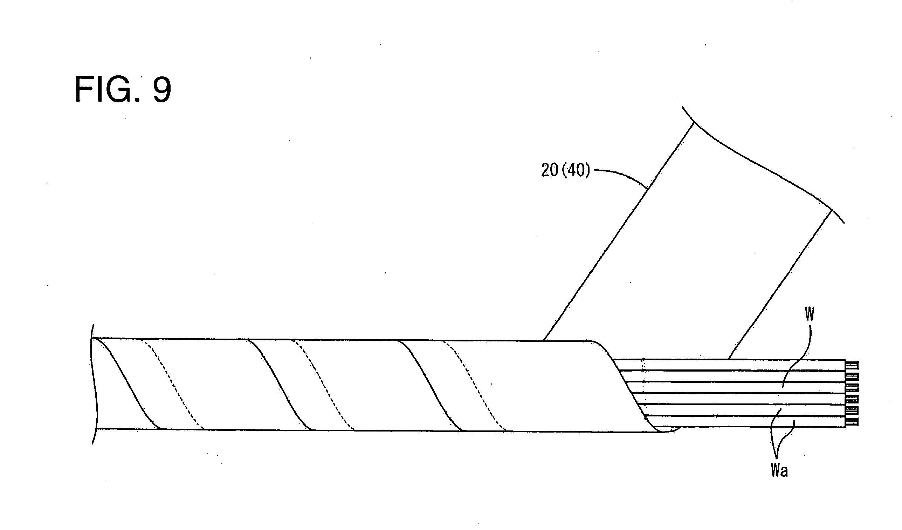

A fourth preferred embodiment of the present invention is described with reference to FIGS. 7 to 17. A protective tape to be at least partly wrapped around a wire bundle forming a wiring harness is illustrated as a protective member in this embodiment. A wire bundle W is a bundle of a plurality of insulated wires Wa or shielded wires as shown in FIG. 9. A protective tape 20 of the fourth embodiment is thicker than a protective tape 40 of a fifth embodiment to be described later. The protective tape 20 of the fourth embodiment is described as a first protective tape 20 below.

As shown in FIG. 7, the first protective tape 20 is composed or comprised of a base member 21 and an adhesive layer 24 formed on the underside (or radially inner side in an arranged state) of the base member 21 to be held in contact with the outer circumferential surface of the wire bundle W.

The base member 21 preferably has a three-layer structure in which two knitted fabrics are bonded using a glue 23. Here, the "knitted fabric" particularly is a fabric in which either one of a warp and a weft is a substantially continuous loop and the other is inserted through this loop. In contrast, a "woven fabric" particularly is a fabric in which a warp and a weft vertically intersect.

A polyamide glue is illustrated as the glue 23 and applied in dots (or in spots) between the both knitted fabrics 22,

An acrylic adhesive and/or a rubber adhesive are cited as the adhesive forming the adhesive layer 24.

The thicknesses of the respective layers are set such that a thickness t1 of the knitted fabric 22 on the outer side and a thickness t3 of the knitted fabric 22 on the underside preferably are smaller than 1.0 mm, a thickness t2 of the glue 23 preferably is 0.05 to 1.0 mm and/or a thickness t4 of the adhesive layer 24 preferably is 0.05 to 1.0 mm and/or the total thickness preferably is equal to or smaller than 2.0 mm. In this embodiment, the total thickness is about 1.0 mm (thick specification).

Further, the width of the first protective tape 20 preferably is set equal to or smaller than about 100 mm and, for example, selected to be about 25 mm.

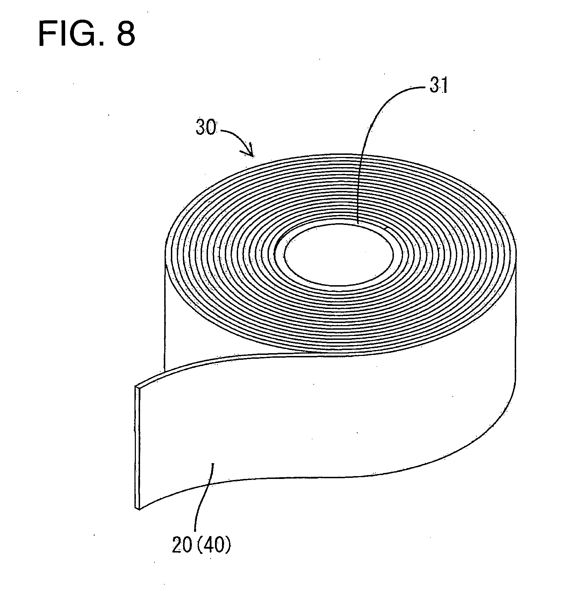

The first protective tape 20 having such width (e.g. about 25 mm) and/or thickness (e.g. about 1.0 mm) is prepared while being wound around a paper core tube 31, i.e. prepared as a so-called roll 30 as shown in FIG. 8.

Upon protecting the wire bundle W forming a part of the wiring harness, the first protective tape 20 is (e.g. manually) wrapped around this wire bundle W. As an example, the first protective tape 20 is substantially spirally wrapped around the outer circumferential surface of the wire bundle W with the lateral edges thereof overlapped each other as shown in FIG. 9 while being dispensed from the roll 30, and the adhesive layer 24 on the underside is bonded (radially inner side when in the bonded state) to the outer circumferential surface of the wire bundle W. The overlap may be about 1/4 of the entire width (1/4 overlap), about half the entire width (half overlap) or the like.

After the first protective tape 20 is wrapped around in a specified (predetermined or predeterminable) region of the wire bundle W, this first protective tape 20 needs to be cut or separated. Here, since the base member 21 of the first protective tape 20 is mainly composed of two knitted fabrics, it can be easily hand-cut or separated by hand, i.e. has a good hand cutting property.

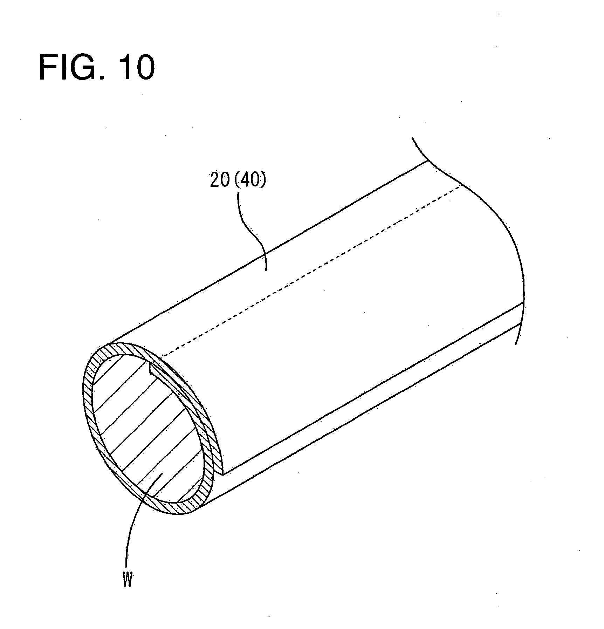

Another form of wrapping the first protective tape 20 around the wire bundle W may be an example shown in FIG. 10. In this example, the first protective tape 20 is wrapped around the outer circumferential surface of the wire bundle W substantially into a cylindrical shape, i.e. a so-called rolled shape with the opposite lateral edges overlapped.

More specifically, the first protective tape 20 is brought into contact with the wire bundle W substantially in the longitudinal direction of the wire bundle W while being dispensed from the roll 30 (see FIG. 8), and is hand-cut or separated by hand after being brought substantially into contact over a specified (predetermined or predeterminable) region. Thereafter, the first protective tape 20 is rolled with the opposite lateral edges at least partly overlapped preferably by a distance which is about 1/4 of the entire width, and the adhesive layer 24 on the underside substantially is bonded to the outer circumferential surface of the wire bundle W.

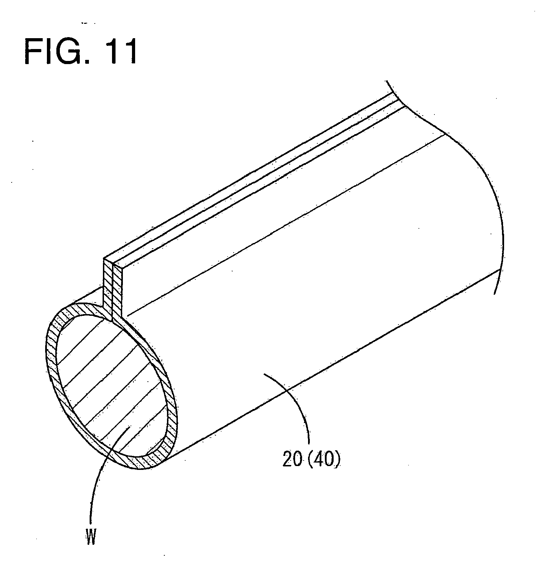

The one shown in FIG. 11 can be cited as another wrapping mode. In this example, the first protective tape 20 substantially is wrapped around the outer circumferential surface of the wire bundle W substantially into a cylindrical shape with the inner surfaces of the opposite lateral edges bonded together.

More specifically, the first protective tape 20 is so brought into contact with the wire bundle W as to extend substantially in the longitudinal direction of the wire bundle W while being dispensed from the roll 30, hand-cut or separated by hand after being brought into contact over a specified (predetermined or predeterminable) region and, thereafter, wrapped with the inner surfaces of the substantially opposite lateral edges bonded together, wherein the adhesive layer 24 on the underside is bonded to the outer circumferential surface of the wire bundle W. A dimension of the opposite lateral edges bonded together is, for example, about 1/4 of the entire width of the first protective tape 20.

Evaluation as to whether or not the first protective tape 20 wrapped as described above is effective as a protective member for the wire bundle W substantially means evaluation of the abrasion resistance of the first protective tape 20 itself. Here, if it is assumed that a hole is made in the first protective tape 20 to such an extent that the wire bundle W is exposed to the outside when the first protective tape 20 is subjected to an external load, the first protective tape 20 of this embodiment can be said to have good abrasion resistance.

The base member 21 of this first protective tape 20 preferably has the three-layer structure by bonding the two (preferably knitted) fabrics 22 using the glue 23 and, in the case of being subjected to an external load, the load is distributed mainly in the two (knitted) fabrics 22, i.e. a stress is relaxed. That is why the first protective tape 20 is thought to be difficult to abrade. Further, since the glue 23 preferably is applied in dots to form clearances between the two (knitted) fabrics 22, a better load distribution function of the knitted fabrics 22 is displayed.

Upon conducting a test on the abrasion resistance of the first protective tape 20 according to this embodiment, the following result was obtained.

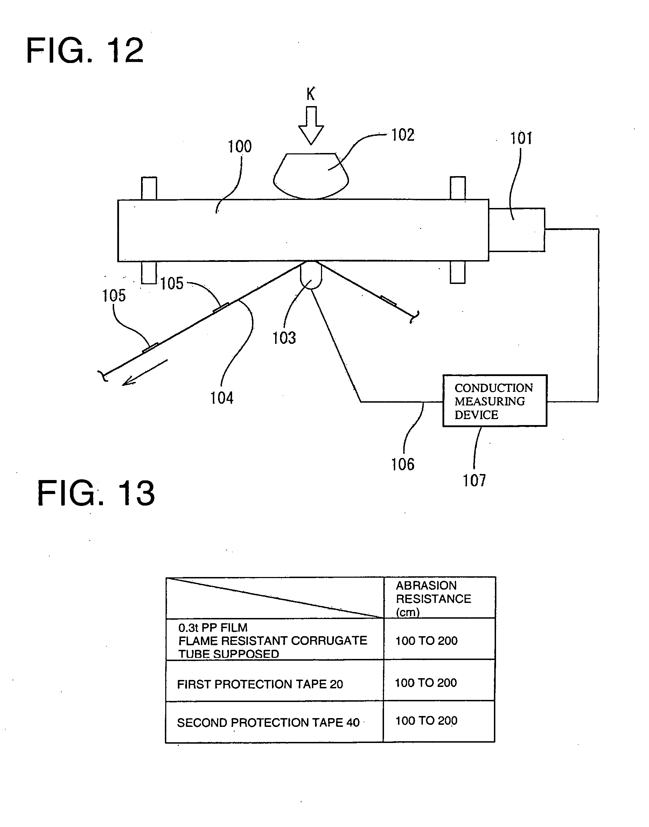

Upon the test, an abrasion resistance tester (for automotive low-pressure wires) specified by the JIS was used as shown in FIG. 12. In this tester, a sample 100 was wrapped around the outer circumferential surface of a conductor 101 made of an aluminum tube and held between a pair of upper and lower metallic holding bodies 102, 103, and an endless abrasive tape (article in compliance with JIS R6251) was so arranged between the lower holding body 103 and the sample 100 as to be able to run. Conductive portions 105 were provided at specified intervals (150 mm) on the abrasive tape 104, and the lower holding body 103 and the conductor 101 were connected by a conductive wire 106 with a conduction measuring device 107 provided at an intermediate position.

With a load K (45 gf) exerted on the upper holding body 102, the abrasive tape 104 was caused to run at a specified speed (1500 mm/min). When the sample 100 was gradually abraded and consequently a hole was made therein as the abrasive tape 104 runs, one conductive portion 105 of the abrasive tape 104 came into contact with the conductor 101 through the hole, whereby a current flowed in the conductive wire 106 and the abrasive tape 104 stopped when this current was detected by the conduction measuring device 107.

In short, the abrasive tape 104 stops running when a hole is made in the sample 100 after the run of the abrasive tape 104 is started. Thus, the longer the running time of the abrasive tape 104, i.e. the longer the running distance, the more difficult it is to make a hole in the sample 100, i.e. the better abrasion resistance can be evaluated.

Upon testing the first protective tape 20 according to this embodiment, the running distance of the abrasive tape 104 indicating the abrasion resistance was confirmed to have reached 100 to 200 mm as shown in FIG. 13.

On the other hand, upon conducting the same test using a PP (polypropylene) film having a thickness of 0.3 mm, assuming a flame resistant corrugated tube used as a conventional protective member as a sample, numerical values relating to the abrasion resistance were confirmed to be 100 to 200 mm.

In other words, there was obtained the test result that the first protective tape 20 of this embodiment had good abrasion resistance similar to that of corrugated tubes proven to be good protective members for wiring harnesses.

Since the first protective tape 20 of this embodiment preferably has the three-layer structure by bonding the two (preferably knitted) fabrics 22 using the glue 23 and/or the glue 23 preferably is applied in dots (or in spots) to form the clearances between the two (preferably knitted) fabrics 22, sound deadening qualities are also good.

In order to evaluate the sound deadening qualities, two tests were conducted, one relating to hammering sounds and the other relating to friction sounds.

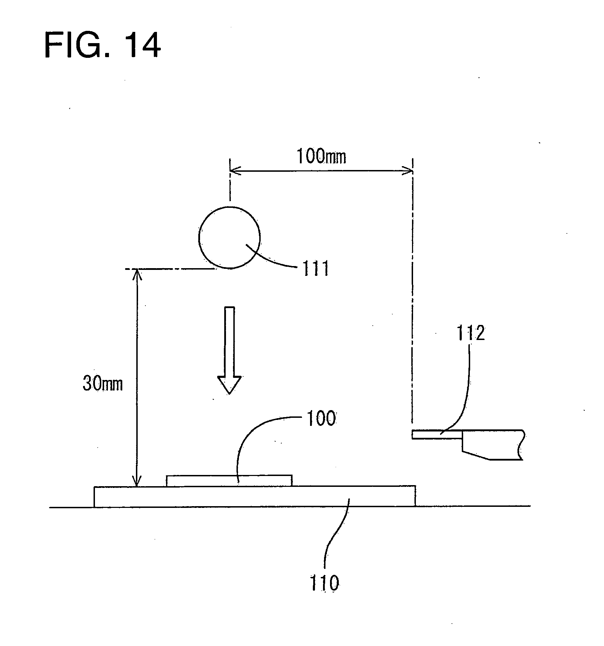

The test relating to hammering sounds was such that, as shown in FIG. 14, a sample 100 was placed on a test plate 110 made of a stainless steel plate (can also be a PP (polypropylene) plate or a PE (polyethylene) plate) having a thickness of 2 mm, an iron ball 111 of 100 g was freely dropped onto the sample 100 from a position at a height of 30 mm, and hammering sounds generated at that time were measured by a measuring device 112 arranged slightly above the test plate 110 and at a horizontal distance of 100 mm from the dropped position of the iron ball 111.

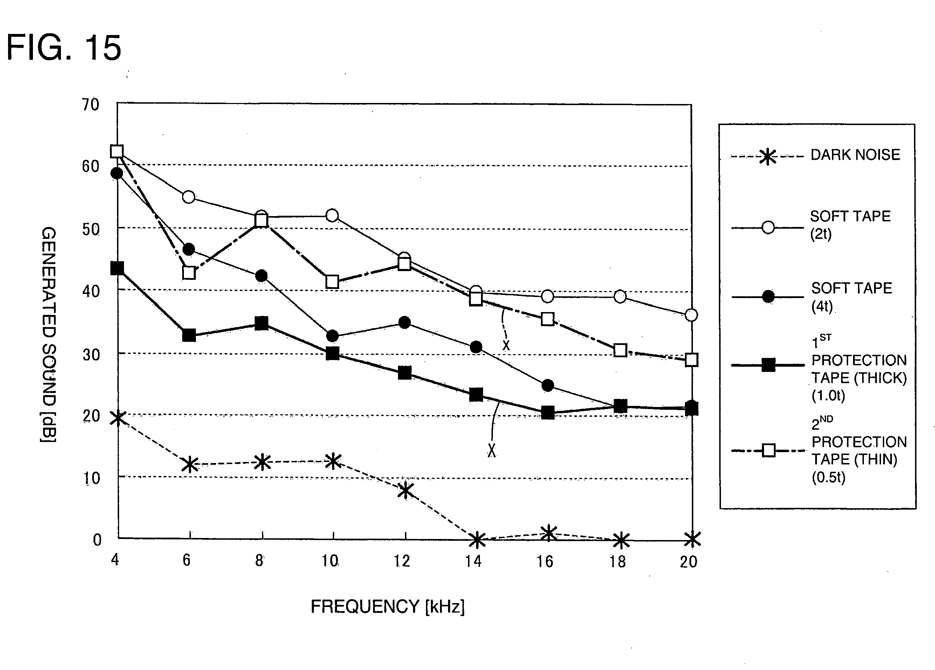

The result of testing the first protective tape 20 according to this embodiment is as shown by a characteristic curve X of a graph of FIG. 15, and hammering sounds are equal to or below 40 dB in an audible area (about 6 to 20 kHz). This indicates sound deadening qualities or absorption properties comparable to or higher than those of a soft tape (urethane foam tape) having a thickness of 4 mm proven to have good sound deadening or absorption qualities against hammering sounds.

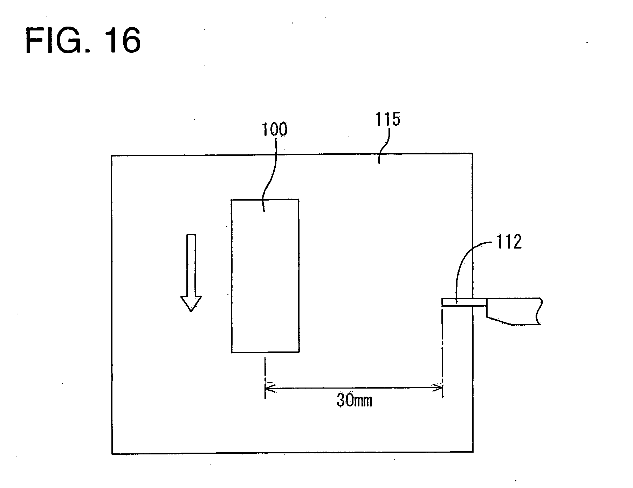

The test relating to friction sounds was such that, as shown in FIG. 16, a sample 100 was manually slid at a speed of about 20 mm/sec in a direction of an arrow from a specified position on a test plate 115 made of a stainless steel plate (can also be a PP (polypropylene) plate or a PE (polyethylene) plate) having a thickness of 2 mm, and friction sounds generated at that time were measured by a measuring device 112 arranged slightly above the test plate 115 and at a horizontal distance of 30 mm from the sliding position of the sample 100.

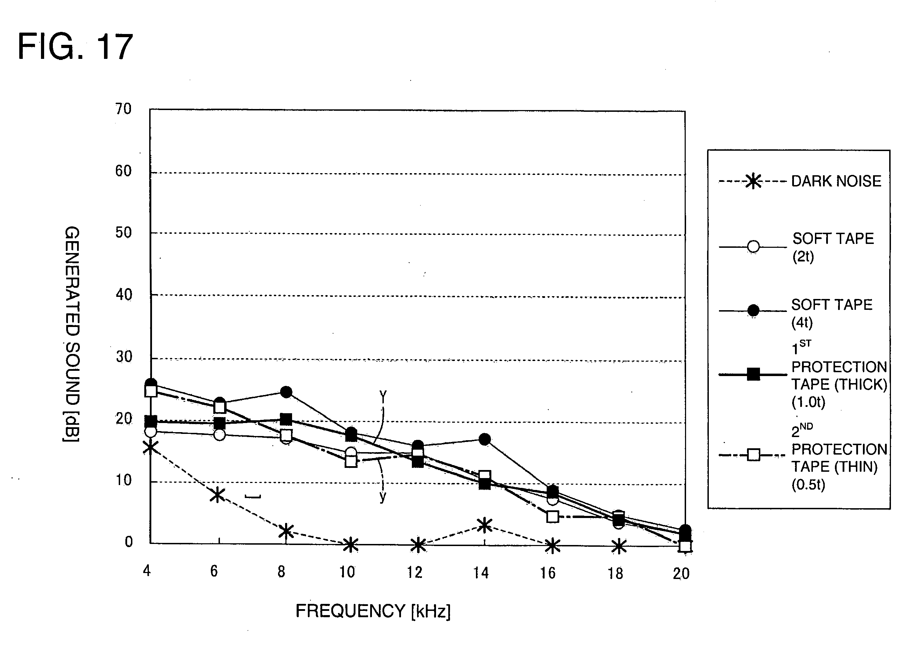

The result of testing the first protective tape 20 according to this embodiment is as shown by a characteristic curve Y of a graph of FIG. 17, and friction sounds are equal to or below 20 dB in the audible area (6 to 20 kHz). This indicates sound deadening qualities or absorption properties comparable to or higher than those of soft tapes (urethane foam tapes) having a thickness of 2 mm and a thickness of 4 mm proven to have good sound deadening qualities against friction sounds.

By the above two tests on the sound deadening qualities, the first protective tape 20 of this embodiment was confirmed to have good sound deadening qualities against both hammering sounds and friction sounds.

Since the base member 21 of the first protective tape 20 has the three-layer structure as described above and the glue 23 is applied preferably in dots to form the clearances between the two knitted fabrics 22, the first protective tape 20 also has good flexibility and can be closely wrapped around the outer circumferential surface of the wire bundle W even if the outer circumferential surface of the wire bundle W is uneven or the wire bundle W is bent.

As described above, if the first protective tape 20 according to this embodiment is used as the protective member for the wire bundle B forming the wiring harness, the following numerous advantages can be obtained.

First of all, since the first protective tape 20 itself has abrasion resistance comparable to that of corrugated tubes proven to be good protective members for the wire bundle W, it sufficiently fulfills its function of protecting the wire bundle W.

In addition, the first protective tape 20 preferably can be mounted only by being wrapped around the outer circumferential surface of the wire bundle W while being dispensed from the roll 30, and also can be easily hand-cut or separated by hand due to its good hand cutting property, wherefore the first protective tape 20 as the protective member can be efficiently mounted.

Since the operation time can be shortened and the number of parts can also be reduced in this way, a production cost of the wiring harness can be drastically reduced.

Since preferably the first protective tape 20 having a thickness of about 1.0 mm is only wrapped, an increase of the diameter of the wiring harness is suppressed to a minimum level, which contributes to space saving and also to weight saving.

Since the first protective tape 20 has good sound deadening qualities, the generation of noise is suppressed when the wiring harness comes into contact with or is abraded against surrounding members due to vibration or the like.

Further, since the first protective tape 20 also has good flexibility, it can be closely wrapped around the outer circumferential surface of the wire bundle W even if the outer circumferential surface of the wire bundle W is uneven or the wire bundle W is bent.

### <Fifth Embodiment>

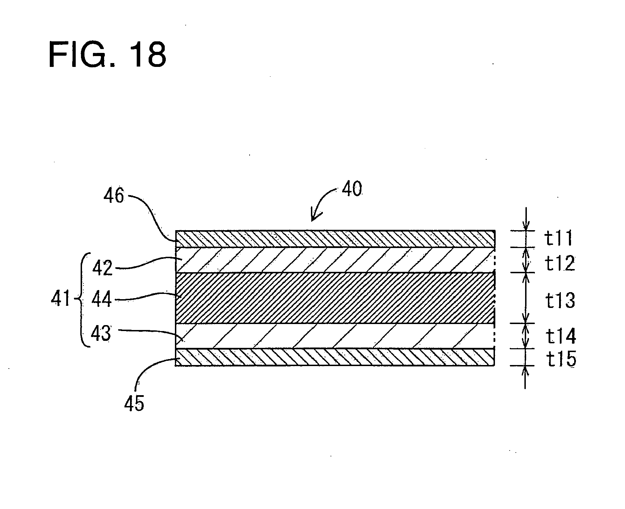

A fifth prefered embodiment of the present invention is described with reference to FIG. 18. In this embodiment is shown another example of a protective tape to be at least partly wrapped around a wire bundle W e.g. forming a wiring harness. The description common or relating to the above fourth embodiment is given appropriately with reference to the drawings relating to the fourth embodiment.

A protective tape 40 of the fifth embodiment is thinner as compared with the first protective tape 20 of the above fourth embodiment and is described as the second protective tape 40 below.

As shown in FIG. 18, the second protective tape 40 is composed or comprised of a base member 41, an adhesive layer 45 formed on the underside of the base member 41 (radially inner side when mounted) to be held in contact with the outer circumferential surface of the wire bundle W and a release film 46 formed on the outer surface of the base member 41 (radially inner side when mounted).

The base member 41 has a three-layer structure by bonding a (preferably woven) fabric 42 and a (preferably nonwoven) fabric 43 using a rubber adhesive 44.

An acrylic adhesive and a rubber adhesive can be cited as an adhesive forming the adhesive layer 45. A polyethylene film is illustrated as the release film 46.

The thicknesses of the respective layers preferably are set such that a thickness t11 of the release film 46 as the outermost layer is smaller than 0.05 mm, a thickness t12 of the woven fabric 42 on the outer side of the base member 41 is smaller than 0.2 mm, a thickness t13 of the rubber adhesive 44 as an intermediate layer is 0.05 to 0.1 mm, a thickness t14 of the nonwoven fabric 43 on the underside is smaller than 0.2 mm and/or a thickness t15 of the adhesive layer 45 on the underside is 0.05 to 1.0 mm and/or, preferably in addition, the total thickness is set equal to or smaller than 1.0 mm. In this embodiment, the total thickness is 0.5 mm (thin specification).

Further, the width of the second protective tape 40 preferably is set equal to or smaller than about 100 mm and, for example, selected to be 25 mm.

The second protective tape 40 having such width (25 mm) and/or thickness (0.5 mm) is, likewise, prepared as a roll 30 by being wound around a paper core tube 31 as shown in FIG. 8.

Here, the outer layer of the base member 41 of the second protective tape 40 is formed by the (preferably woven) fabric 42. If the second protective tape 40 is wound into the roll 30 as described above with the woven fabric 42 exposed, the adhesive may possibly remain on the rear surface of the second protective tape 40 or fibers of the woven fabric 42 may possibly be pulled as the second protective tape 40 is dispensed. In contrast, since the release film 46 preferably is arranged on the outer surface of the base member 41 in this embodiment, the adhesive is reliably separated from the rear surface of the second protective tape 40 and the fibers of the woven fabric 42 are prevented from being pulled when the second protective tape 40 is dispensed.

The second protective tape 40 of this embodiment preferably is similarly manually wrapped around the wire bundle W. Similar to the fourth embodiment, a mode of wrapping the second protective tape 40 with the opposite lateral edges at least partly overlapped as shown in FIG. 9, a mode of wrapping the second protective tape 20 into a cylindrical shape, i.e. into a roll with the opposite lateral edges at least partly overlapped as shown in FIG. 10, and a mode of wrapping the second protective tape 40 into a cylindrical form with the inner surfaces of the opposite lateral edges bonded together as shown in FIG. 11 can be cited as exemplary wrapping modes.

Evaluation as to whether or not the second protective tape 40 wrapped as described above is effective as a protective member for the wire bundle W substantially means evaluation of the abrasion resistance of the second protective tape 40 itself. The second protective tape 40 can be said to similarly have good abrasion resistance.

The protective tape 40 is thought to be difficult to abrade because the base member 41 of the second protective tape 40 has the three-layer structure by bonding the (woven) fabric 42 and the (nonwoven) fabric 43 via a relatively thick layer of the rubber adhesive 44 and, in the case of being subjected to an external load, a stress is relaxed mainly by the rubber adhesive 44 as an intermediate layer.

Upon conducting a test relating to the abrasion resistance of the second protective tape 40 similarly using the abrasion resistance tester shown in FIG. 12, the running distance of the abrasive tape 104 indicating the abrasion resistance was confirmed to have reached 100 to 200 mm as shown in FIG. 13, i.e. there was obtained a test result to the effect that the second protective tape 40 of this embodiment has good abrasion resistance comparable to that of corrugated tubes proven to be good protective members for wiring harnesses.

Since the base member 41 of the second protective tape 40 of this embodiment preferably has the three-layer structure by bonding the (preferably woven) fabric 42 and the (preferably nonwoven) fabric 42 via the relatively thick layer of the (preferably rubber) adhesive 44 and, particularly, the relatively thick layer of the (rubber) adhesive 44 is arranged as the intermediate layer, sound deadening qualities are also good.

In order to evaluate the sound deadening qualities, two tests were similarly conducted, one relating to hammering sounds shown in FIG. 14 and the other relating to friction sounds shown in FIG. 16.

The result of the test relating to hammering sounds is as shown by a characteristic curve x of the graph of FIG. 15, and hammering sounds are equal to or below 50 dB in the audible area (about 6 to 20 kHz). This indicates sound deadening qualities comparable to or higher than those of a soft tape (urethane foam tape) having a thickness of 2 mm proven to have good sound deadening qualities against hammering sounds.

On the other hand, the result of the test relating to friction sounds is as shown by a characteristic curve y of the graph of FIG. 17, and friction sounds are substantially equal to or below 20 dB in the audible area (about 6 to 20 kHz). This indicates sound deadening qualities comparable to or higher than those of soft tapes (urethane foam tapes) having a thickness of 2 mm and a thickness of 4 mm proven to have good sound deadening qualities against friction sounds.

By the above both tests, the protective tape of this embodiment was confirmed to have good sound deadening qualities against both hammering sounds and/or friction sounds.

Since the base member 41 of the second protective tape 40 preferably has the three-layer structure and the relatively thick layer of the rubber adhesive 44 is arranged as the intermediate layer, the second protective tape 40 also has good flexibility and can be closely wrapped around the outer circumferential surface of the wire bundle W even if the outer circumferential surface of the wire bundle W is uneven or the wire bundle W is bent.

As described above, if the second protective tape 40 according to this embodiment is used as the protective member for the wire bundle B forming the wiring harness, the following advantages can be obtained substantially similar to the fourth embodiment.

These advantages are described again. Since the second protective tape 40 itself has abrasion resistance comparable to that of corrugated tubes proven to be good protective members for the wire bundle W, it sufficiently fulfills its function of protecting the wire bundle W. In addition, the second protective tape 40 can be mounted only by being wrapped around the outer circumferential surface of the wire bundle W while being dispensed from the roll 30, and also can be easily hand-cut due to its good hand cutting property, wherefore the second protective tape 40 as the protective member can be efficiently mounted. Since the operation time can be shortened and the number of parts can also be reduced, a production cost can be drastically reduced.

Since the very thin second protective tape 40 having a thickness of about 0.5 mm is only wrapped, an increase of the diameter of the wiring harness is suppressed to a minimum level, which contributes to space saving and also to weight saving. Further, since the second protective tape 40 has good sound deadening qualities, the generation of noise is suppressed when the wiring harness comes into contact with or is abraded against surrounding members due to vibration or the like. Furthermore, since the second protective tape 40 also has good flexibility, it can be closely wrapped around the outer circumferential surface of the wire bundle W even if the outer circumferential surface of the wire bundle W is uneven or the wire bundle W is bent.

Accordingly, to provide a wire protective member which requires reduced time and effort for a mounting operation and a reduced number of parts, is space saving and has improved abrasion resistance, a wire protective member 10 is provided for at least partly covering a wire 11 from an outer side. The wire protective member includes a first base member 13 including a first adhesive layer 12 to be bonded to the wire 11 on one surface thereof, a second base member 16 to be placed on a surface of the first base member 13 substantially opposite to the one including the first adhesive layer 12, and one or more spacers 14 formed in parts of a clearance between the first and second base members 13, 16. Since particularly no clearance is formed between the wire 11 and the protective member 10, space saving can be promoted. Further, since it is sufficient to wrap the wire 11 with one member composed of the first adhesive layer 12, the first base member 13, the layer partly formed with the spacers 14 and the second base member 16, time and effort for a mounting operation and the number of parts can be reduced.

### <Other Embodiments>

The present invention is not limited to the above described and illustrated embodiments. For example, the following embodiments are also included in the technical scope of the present invention.
(1) Although the spacers are formed by particularly applying the adhesive substantially in rectangles (or other shapes) on the other surface (lower surface in FIG. 2) of the first base member in the above first and second embodiments, the method for forming the spacers is not limited to the method for applying the adhesive and may be a method for applying a hot melt glue or a method for bonding another sheet of a desired shape to the first base member.
(2) Although the spacers substantially have a rectangular shape of 10 mm to 20 mm×10 mm to 20 mm, the interval between the adjacent spacers is about 2 mm to 5 mm and/or the thickness of the spacers is equal to or larger than 0.1 mm and/or equal to or smaller than 0.5 mm in the above first and second embodiments, the size and the interval of the spacers are not limited to these. The adjacent spacers may be spaced apart to such an extent as not to join together.
(3) Although the protective member is made easily hand-cut or separated by hand by being formed with the perforations and setting the sum of the thickness of the first base member and that of the second base member substantially equal to or smaller than 1.0 mm in the above first embodiment, the sum of the thickness of the first base member and that of the second base member may be set substantially equal to or smaller than 1.0 mm without forming any perforation or perforations may be formed while preferably setting the sum of the thickness of the first base member and that of the second base member larger than 1.0 mm. Further, the protective member may be made hand-cut by adjusting the rupture strength of the protective member itself, for example, by adjusting the materials of the base member and the adhesive layer.

It is preferable to set the sum of the thickness of the first base member and that of the second base member equal to or smaller than 0.5 mm since the protective member can be more easily hand-cut.
(4) Although the perforations are formed after one sheet is formed by placing the first adhesive layer, the first base member, the layer formed with the spacers and the second base member one over another in the above first embodiment, these layers may be laminated after perforations are formed at least in either one of the first base member and the second base member. Further, the perforations may be formed only in either one of the first base member and the second base member.
(5) Although the wire protective member covering one wire is shown in the above first and second embodiments, the wire protective member may cover two or more wires together.

Although the two fabrics constituting the base member of the protective tape are both knitted fabrics in the above fourth embodiment, a knitted fabric and a woven fabric may be combined or both of them may be woven fabrics.
(7) In the above fourth embodiment, if the glue for bonding the two fabric materials has, for example, a relative low hardness, it may be applied over the entire surface.
(8) An adhesive may be used instead of the glue to bond the two fabric materials. An acrylic adhesive or a rubber adhesive is preferably used as the adhesive.
(9) In the fifth embodiment, a knitted fabric may be used as the fabric material constituting the base member of the protective tape instead of the woven fabric.
(10) In the fifth embodiment, a resin film, a woven fabric, a knitted fabric or a foam may be used as the sheet material constituting the base member of the protective tape in addition to the nonwoven fabric.
(11) In the fifth embodiment, the fabric material and the sheet material constituting the base member of the protective tape may be arranged on the opposite sides.
(12) In the fifth embodiment, if the outer layer of the base member of the protective tape is formed by a material which has a small possibility that an adhesive remains or fibers are pulled when being in the form of a roll, it may not be necessary to provide the release film.

### LIST OF REFERENCE NUMERALS

10 ... protective member (wire protective member)
11 ... wire
12 ... first adhesive layer
13 ... first base member
14 ... spacer (second adhesive portion)
15 ... void portion
16 ... second base member
20 ... first protective tape (protective member)
21 ... base member
22 ... knitted fabric (fabric material)
23 ... glue
24 ... adhesive layer
30 ... roll
40 ... second protective tape (protective member)
41 ... base member
42 ... woven fabric (fabric material)
43 ... nonwoven fabric (sheet material)
44 ... rubber adhesive
45 ... adhesive layer
W ... wire bundle

## Claims

1. A wire protective member (10) for at least partly covering a wire (11) from an outer side, comprising:
a first base member (13) including a first adhesive layer (12) to be bonded to the wire (11) on one surface thereof,
a second base member (16) to be placed on a surface of the first base member (13) opposite to the one including the first adhesive layer (12), and
one or more spacers (14) formed in parts of a clearance between the first and second base members (13, 16).

2. A wire protective member according to claim 1, wherein the spacers (14) are formed by applying an adhesive to parts of the surface of the first base member (13) opposite to the one including the first adhesive layer (12).

3. A wire protective member according to one or more of the preceding claims, wherein at least either one of the first and second base members (13, 16) is formed with cutting or separation lines.

4. A wire protective member according to one or more of the preceding claims, wherein the sum of the thickness of the first base member (13) and that of the second base member (16) is substantially equal to or smaller than 1.0 mm.

5. A wire protective member according to one or more of the preceding claims, wherein the wire protective member (10) is in the form of a substantially rectangular sheet with the length of the longer sides thereof related to that of the wire (11) and/or the length of the shorter sides thereof related to that of the outer circumference of the wire (11).

6. A wire protective member (20), in particular according to one or more of the preceding claims, in the form of a tape for at least partly covering a wire (11) from an outer side, comprising:
a laminated or composite base member (21) formed by bonding two fabric materials (22) made of a knitted fabric and/or a woven fabric using a glue (23) and/or an adhesive, and
an adhesive layer (24) formed on the underside of the base member (21).

7. A wire protective member according to claim 6, wherein the glue (23) and/or the adhesive for bonding the two fabric materials (22) of the base member (21) is applied in dots.

8. A wire protective member (40), in particular according to one or more of the preceding claims, in the form of a tape for at least partly covering a wire (11) from an outer side, comprising:
a laminated or composite base member (41) formed by bonding a fabric material (42) made of a woven fabric or a knitted fabric and a sheet material (43) via a rubber adhesive (44), and
an adhesive layer (45) formed on the underside of the base member (41).

9. A method of at least partly covering a wire (11) from an outer side with a wire protective member (10), comprising the following steps:
bonding a first base member (13) including a first adhesive layer (12) to the wire (11) on one surface thereof,
placing a second base member (16) on a surface of the first base member (13) opposite to the one including the first adhesive layer (12),
forming one or more spacers (14) in parts of a clearance between the first and second base members (13, 16),
at least partly applying the thus obtained wire protective member (10) onto the wire (11).

10. A method according to claim 9, wherein the forming step of the spacers (14) comprises applying an adhesive to parts of the surface of the first base member (13) opposite to the one including the first adhesive layer (12).

11. A method according to claim 9 or 10, wherein at least either one of the first and second base members (13, 16) is formed with cutting or separation lines.

12. A method according to one or more of the preceding claims 9 to 11, wherein the sum of the thickness of the first base member (13) and that of the second base member (16) is set to be substantially equal to or smaller than 1.0 mm.

13. A method, in particular according to one or more of the preceding claims 9 to 12, of at least partly covering a wire (11) from an outer side with a wire protective member (20) in the form of a tape, comprising the following steps:
forming a laminated or composite base member (21) by bonding two fabric materials (22) made of a knitted fabric and/or a woven fabric using a glue (23) and/or an adhesive,
forming an adhesive layer (24) on the underside of the base member (21), and
at least partly applying the thus obtained wire protective member (20) onto the wire (11).

14. A method according to claim 14, wherein the glue (23) and/or the adhesive for bonding the two fabric materials (22) of the base member (21) is applied in dots.

15. A method, in particular according to one or more of the preceding claims 9 to 14, of at least partly covering a wire (11) from an outer side with a wire protective member (40) in the form of a tape, comprising the following steps:
forming a laminated or composite base member (41) by bonding a fabric material (42) made of a woven fabric or a knitted fabric and a sheet material (43) via a rubber adhesive (44),
forming an adhesive layer (45) on the underside of the base member (41), and
at least partly applying the thus obtained wire protective member (40) onto the wire (11).
